# EUROPEAN PATENT APPLICATION

(11) **EP 1 300 212 A2**
(43) Date of publication of application: **09.04.2003**
(21) Application number: 02022083.6
(22) Date of filing: 02.10.2002
(51) Int. Cl.: B23D 21/04

(54) **Cutting device for pipes and relative cutting method**

(30) Priority: 08.10.2001 IT RA20010011
(71) Applicant: IPM di Argnani Claudio & C. Snc, 48022 Lugo (Ravenna) (IT)
(72) Inventor: Argnani Claudio, 48010 Fusignano (Ravenna) (IT)
(74) Representative: Petruzziello, Aldo

(57) **Abstract**

The device refers to a cutting and chamfering tool for pipes, preferably of plastic material, composed of single-bladed elements (4, 5), fixed on a ring (1) with a greater diameter than the pipe (3) and oriented toward the centre of the ring and such that during working, the pipe is on the inside of the ring and parallel thereto; a first category (4) of these elements, designed for cutting and composed of functionally identical units, being disposed on different radial directions and equidistant from the centre, and a second category (5) thereof, designed for chamfering and also composed of functionally identical units, being disposed on different radial directions and equidistant from the centre; and the overall profile generated axially by the movement of the two categories of tools (4, 5) corresponding to the axial profile of the cutting and chamfering planned on the pipe (3).

## Description

In the prior art there exists a very numerous series of cutting and chamfering tools for pipes of plastic material, the main ones being:
1) Circular cutters, shaped for cutting and chamfering, rotating around their own axis (cutting motion) and around the axis of the pipe (feeding motion). They present the drawbacks of being somewhat noisy, given the high cutting speed required, of producing a portion of shavings in the form of dust which fills the surrounding environment and is difficult to recycle, of requiring complex mechanisms to transmit power (electric, pneumatic, mechanical or hydraulic) and to suck up the shavings between the moveable part (through the effect of the feeding motion) ad the fixed part.
2) Single-point cutting tools, rotating around the axis of the pipe, with the possibility of being brought near the centre of the pipe during motion by means of an external command, to perform cutting and chamfering. As in the previous case, complex mechanisms are required to transmit power between the fixed part and the rotating part; furthermore the shavings, being cut continuously, are long and wind around the machine members, proving difficult to suck up.

The present invention has the object of advantageously overcoming these drawbacks. In fact, the tool, made up of numerous single-point cutting elements fixed on a ring which surrounds the pipe, works at much lower cutting speeds with respect to the corresponding cutters, thanks to a more favourable angle of incidence of the penetration movement with respect to the curvature of the pipe, with a direction near to tangency, above all in the initial and final stages of cutting. As a result it produces less noise and simplifies the problems of soundproofing necessary to comply with current standards. The lower cutting speed also makes it possible to remove shavings with a greater thickness and thus of a certain volume, which can be sucked up better and more easily than fine dust and moreover can easily be recycled for subsequent processing.

This tool can also be used advantageously by machines wherein cutting and chamfering are achieved by the combination of two movements, whereof the first is a rotation of the tool around its axis and the second is a rigid translation without angular rotation of said tool along the circumference which its centre describes around the axis of the tube. These last applications also afford the advantages that simple devices, such as flexible members (cables or tubes) are sufficient to suck up the shavings or carry the power, with considerable structural simplifications and that furthermore the shavings, being of modest length, do not wind around the machine and are easily removed.

Further characteristics and advantages of the present invention will be more evident from the detailed description of a preferred embodiment that follows, illustrated by way of non-limiting example in the appended drawings, in which:
Figure 1 is a perspective view of the cutting device according to the invention;
Figure 2 is a schematic cross-sectional view showing a pipe inside the cutting device of Fig. 1 and a first configuration of movement, in which the device is moving and the pipe is fixed;
Figure 2A is a view like Fig. 2, showing a second configuration of movement, in which the device is fixed and the pipe is moving;
Figure 3 represents a photographic series, referring to the configurations of movements of Figure 2A, of four reciprocal positions of the device and the pipe during work, spaced apart from each other by 90° on the circumference that the centre 9 of the device of Figure 1 describes by translating without rotating angularly around the axis 8 of the pipe; the letters a, b, c, d therefore represent the four successive positions of the centre 9 of the device.

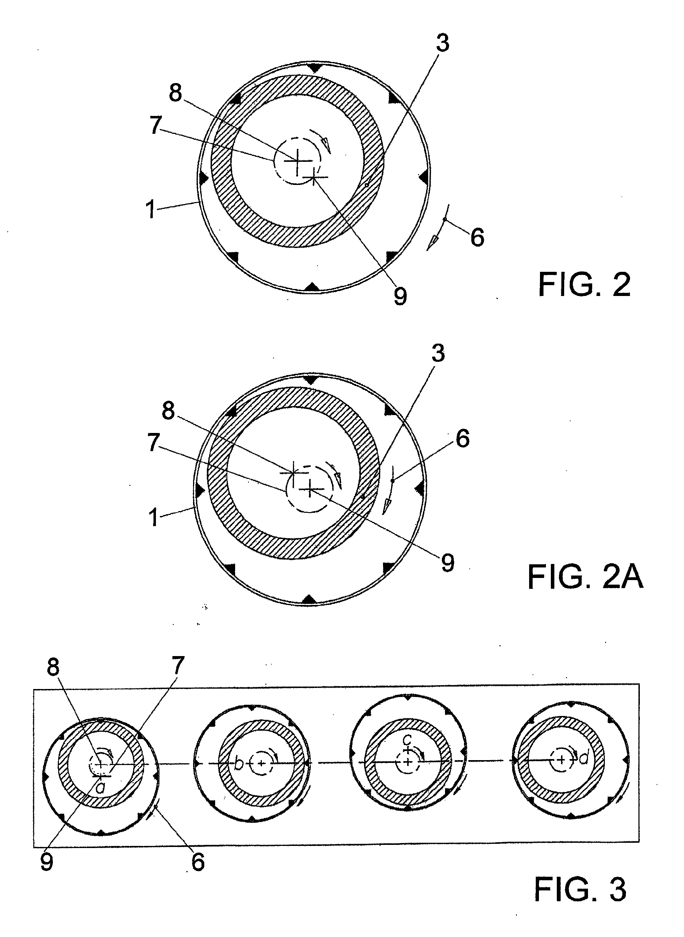

A stiff ring 1 forms the main support, which can be fixed by means of a series of holes 2 and centred with the cutting and chamfering device; during working, in the configurations of Figure 2 and other possible ones, the pipe 3 is inside the ring 1, whereas their axes are parallel.

Two categories of tools are fixed along the ring 1, disposed in a more or less radial direction, with the cutting edges facing towards the centre 9 of said ring. A first category comprises a series of tools 4 for cutting proper, all identical to each other and disposed in the same fashion and at the same distance with respect to the centre of the ring and angularly equidistant from one another. A second category comprises a series of tools 5 for external chamfering of the edge of the pipe 3, also identical to one another and disposed in the same fashion and at the same distance with respect to the centre of the ring 1 and angularly equidistant from one another. The two categories of tools 4 and 5 identify with their active cutting edges, on an axial plane, a profile coinciding with the axial profile of the cut and chamfered end of the pipe 3.

The device as described can exert the cutting and chamfering action principally according to the two modalities of Figures 2 and 2A, which have in common a rotating movement 6 and a translation without angular rotation 7 on a circumference with the axis parallel to that of the pipe 3.

In Figure 2, referring to a generic position between the device and the pipe during work, the device performs both the rotatory movement 6 around its axis 9 and the rigid translation 7 without angular rotation of each of its points along a circumference, whereof, in Figure 2 itself and in the next Figure 3, that travelled by the centre 9 of the device around the axis 8 of the pipe 3 is indicated.

In Figure 2A, again referring to a generic position between the device and the pipe during work, the pipe 3 performs both the rotatory movement 6 around its axis 8 and the rigid translation without angular rotation of each of its points along a circumference, whereof in Figure 2A itself that designated 7 is indicated, travelled by the axis 8 of the pipe around the centre 9 of the device.

In both configurations, in the resting state, the circumference 7 has a radius of zero, hence the axis 8 of the pipe 3 coincides with the centre 9 of the device 1.

The composition of the movements 6 and 7, of suitable diameters, produces the interference of the active cutting edges of the tools with the thickness of the pipe, which gives rise to the programmed cutting and chamfering; by increasing the number of tools 4 and 5 fixed on the ring, all other parameters remaining equal, the speed of the cutting and chamfering process increases.

The inside diameter of the ring 1 must always be greater than the outside diameter of the pipe 3, by an amount that depends principally on the radius of the movement 7 and the depth of the cutting and chamfering to be carried out. In any case, with the modalities of Figures 2 and 2A, the length of the cut made by each individual cutting edge is always rather modest, with generally gradual penetration and exit of the cutting point with respect to the thickness of the pipe, hence the shavings are short and broken up, and there is no impact or vibration.

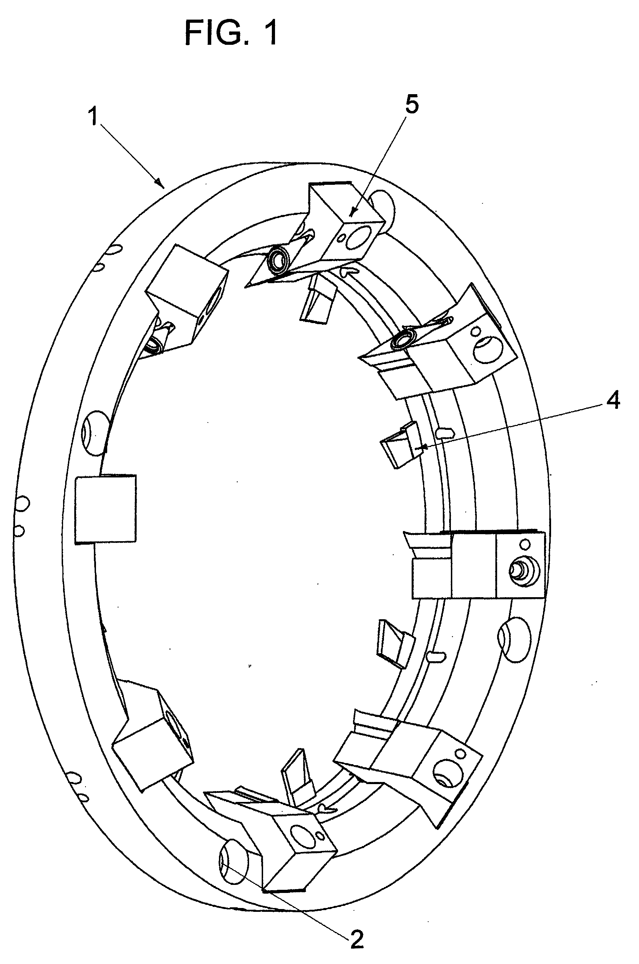

In Figure 1 the tools 4 and 5 are angularly equidistant on the ring 1 to distribute the cutting effort evenly during rotation; an uneven distribution nevertheless does not constitute a functional impediment or an inventive limit.

The movements 6 and 7 are indicated in the drawings as concordant (both are clockwise); however, the fact of both being anticlockwise or discordant with each other (one clockwise and the other anticlockwise) does not constitute a functional impediment or an inventive limit.

By means of the cutting device according to the invention, the pipe (3) can be cut and/or chamfered during the extrusion stage.

## Claims

1. A cutting device for pipes **characterised in that** it comprises:
- a supporting ring (1) with an inside diameter greater than the outside diameter of the pipe (3) to be cut, so that the pipe (3) to be cut can be disposed eccentrically inside said supporting ring (1),
- a plurality of cutting elements (4, 5) supported by said ring (1) with the cutting edge facing substantially towards the centre (9) of said ring,
- rotary drive means, to rotate said ring (1) and/or said pipe (3) in rotation around its own axis (9, 8), so as to generate a relative rotary movement between said ring (1) and said pipe (3), and
- translational drive means, to allow translation of said ring (1) and/or of said pipe (3), along a substantially circular course (7), so as to generate a relative translation between said ring (1) and said pipe (3).

2. A cutting device according to claim 1, **characterised in that** said circular path (7) of translation has a centre coinciding with the axis (8) of said pipe (3) or with the axis (9) of said ring (1) and a radius of curvature equal to the distance between the axis (8) of the pipe (3) and the axis (9) of the supporting ring (1).

3. A cutting device according to claim 1 or 2, **characterised in that** it comprises adjustment means able to vary the centre distance between said pipe (3) and said ring (1), so as to adjust the depth of penetration of the cutting elements (4, 5) into said pipe (3).

4. A cutting device according to any one of the preceding claims, **characterised in that** said cutting elements (4, 5) are of the single-point cutting type.

5. A cutting device according to any one of the preceding claims, **characterised in that** said cutting elements (4, 5) comprise tools for cutting (4) and/or tools for chamfering (5).

6. A cutting device according to any one of the preceding claims, **characterised in that** said cutting elements (4, 5) are disposed angularly equidistant on said supporting ring (1).

7. A cutting device according to any one of the preceding claims, **characterised in that** it is used for cutting pipes of plastic material.

8. A method for cutting a pipe by means of a cutting device comprising a supporting ring (1) supporting cutting elements (4, 5) facing towards the centre (9) of the ring and having an inside diameter greater than the outside diameter of the pipe (3) to be cut, so that the pipe can be positioned in an eccentric position inside said ring (1), the method comprising:
- rotation around its own axis (9, 8) of said supporting ring (1) and/or of said pipe (3) to be cut, so as to generate a relative rotatory movement between said ring (1) and said pipe (3), and
- translation, along a substantially circular path (7), of said ring (1) and/or of said pipe (3), so as to generate a relative translation between said ring (1) and said pipe (3).

9. A cutting method according to claim 8, **characterised in that** the movement of rotation of said supporting ring (1) around its own axis (9) is in the opposite direction with respect to the movement of rotation of said pipe (3) around its own axis (8).

10. A cutting method according to claim 8 or 9, **characterised in that** the movement of translation of said supporting ring (1) along the circular path (7) is in the opposite direction with respect to the movement of translation of said pipe (3) along the circular path.

11. A cutting method according to any one of claims 8 to 10, **characterised in that** said supporting ring (1) performs a translation along a circular path (7) having as its centre the axis (8) of the pipe (3) and as its radius of curvature the centre distance between ring and pipe and/or said pipe (3) performs a translation along a circular path (7) having as its centre the axis (9) of the ring and as its radius of curvature the centre distance between the ring and the pipe.

12. A cutting method according to any one of claims 8 to 11, **characterised in that** it comprises variation of the centre distance between the ring and the pipe to adjust the depth of the cut on the pipe performed by the cutting elements (5, 6).

13. A cutting method according to any one of claims 8 to 12, **characterised in that** said cutting elements (5, 6) also perform a chamfering operation on the pipe (3).

14. A cutting method according to any one of claims 8 to 13, **characterised in that** said pipe (3) is cut and/or chamfered during the extrusion stage
